# EUROPEAN PATENT APPLICATION

(11) **EP 4 325 211 A1**
(43) Date of publication of application: **21.02.2024**
(21) Application number: 22788421.0
(22) Date of filing: 13.04.2022
(51) Int. Cl.: G01N 21/88, G01N 23/04, G01N 23/18, G01R 31/28

(54) **METHOD FOR TESTING MOBILE ELECTRONIC DEVICE IN AUTOMATED DEVICE, AND MOBILE ELECTRONIC DEVICE TEST SYSTEM**

(30) Priority: 14.04.2021 KR 20210048464; 14.03.2022 KR 20220031684
(71) Applicant: Mintit Co., Ltd., Gyeonggi-do 10117 (KR)
(72) Inventor: JI, Chang Hwan, Seoul 06262 (KR); CHO, Sung Lack, Seoul 03913 (KR)
(74) Representative: Gill Jennings & Every LLP
(86) International application number: PCT/KR2022/005325
(87) International publication number: WO 2022/220565

(57) **Abstract**

Disclosed are a method for testing a mobile electronic device in an automated device, and a mobile electronic device test system. According to an embodiment of the present invention, a method for testing a mobile electronic device in an automated device may include the steps of: forming a photographing area by a camera mounted to a photographing box, in a camera part; moving a mobile electronic device, which is input through an inlet of the automated device, to the photographing area by a position alignment part; and as the mobile electronic device is moved to the photographing area, controlling the camera by a control part such that photographing is performed on a specific region of the mobile electronic device, so as to inspect the specific region through a generated photographing image.

## Description

### Technical Field

The present disclosure relates to a method of testing a mobile electronic device in an automated device and a mobile electronic device test system, that may trade in a mobile electronic device having a new size and operation method and perform an examination on the trade-in mobile electronic device.

### Background Art

Existing automatic function test methods for mobile electronic devices were mostly automatic state analysis methods for flat bar-type mobile electronic devices.

However, recently, when a mobile electronic device is unfolded according to its folding shape, the length or width increases relatively nearly twice. Thus, the existing test methods have limitations in examining all the functions of new types of mobile electronic devices.

In addition, as the shape of mobile electronic devices tends to change into completely different forms from existing mobile electronic devices, the existing test methods may not examine new types of mobile electronic devices.

Therefore, there is an urgent need for a new test method of testing a mobile electronic device of a new size and shape while accepting existing mobile electronic device tests.

### Disclosure of the Invention

### Technical Goals

Embodiments of the present disclosure provide a method of testing a mobile electronic device in an automated device and a mobile electronic device test system, that may trade in a mobile electronic device having a new size and operation method and perform an examination on the trade-in mobile electronic device.

### Technical Solutions

According to an embodiment of the present disclosure, a method of testing a mobile electronic device in an automated device may include forming a photographing area using a camera mounted to a photographing box, by a camera part; moving a mobile electronic device inserted through an inlet of the automated device to the photographing area, by a position alignment part; and as the mobile electronic device is moved to the photographing area, controlling the camera such that photographing is performed on a specific region of the mobile electronic device, so as to inspect the specific region through a photographed image, by a control part.

Further, according to an embodiment of the present disclosure, a mobile electronic device test system may be configured to include a camera part configured to form a photographing area using a camera mounted to a photographing box; a position alignment part configured to move a mobile electronic device inserted through an inlet of an automated device to the photographing area; and a control part configured to control the camera such that photographing is performed on a specific region of the mobile electronic device, so as to inspect the specific region through a photographed image, as the mobile electronic device is moved to the photographing area.

### Effects

According to an embodiment of the present disclosure, it is possible to provide a method of testing a mobile electronic device in an automated device and a mobile electronic device test system, that may trade in a mobile electronic device having a new size and operation method and perform an examination on the trade-in mobile electronic device.

### Brief Description of Drawings

FIG. 1 is a block diagram illustrating the configuration of a mobile electronic device test system according to an embodiment of the present disclosure.
FIG. 2 is a diagram of the structure of a photographing box according to the present disclosure.
FIG. 3 is a detailed diagram of the structure of the inside of a photographing box.
FIG. 4 is a diagram illustrating indirect illumination according to the lateral dimension of a photographing box.
FIG. 5 illustrates photographed images (gold-type color) of sides (corners) under direct illumination and indirect illumination.
FIG. 6 is a diagram of the position of a camera for photographing a side (corner) under direct illumination and indirect illumination.
FIG. 7 illustrates photographed images (silver-type color) of sides (corners) under direct illumination and indirect illumination.
FIG. 8 is a diagram of the current state of indirect illumination according to the shape, illumination position, and illumination direction of a photographing box.
FIG. 10 is a diagram illustrating the position of a camera according to the width of a mobile electronic device.
FIG. 11 is a diagram illustrating the position of a camera according to the length of a mobile electronic device.
FIG. 12 is a diagram illustrating the configuration of an X-RAY photographing part.
FIG. 13 illustrates a detailed configuration of a light emitting part and a control part of an X-RAY photographing part.
FIG. 14 is a diagram illustrating an example of photographing an X-RAY image of a mobile electronic device through an X-RAY photographing part.
FIG. 15 illustrates the comparison of X-RAY images of the front and rear surfaces of a mobile electronic device according to radiation time.
FIG. 16 illustrates examples of radiographs of a mobile electronic device.
FIG. 17 is a flowchart illustrating a method of testing a mobile electronic device in an automated device according to an embodiment of the present disclosure.

### Best Mode for Carrying Out the Invention

Hereinafter, example embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

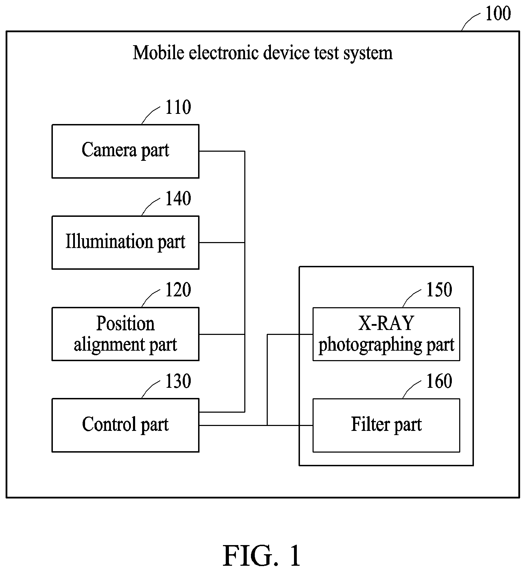

FIG. 1 is a block diagram illustrating the configuration of a mobile electronic device test system according to an embodiment of the present disclosure.

Referring to FIG. 1, according to an embodiment of the present disclosure, a mobile electronic device test system 100 may include a camera part 110, a position alignment part 120, and a control part 130. In addition, in some embodiments, the mobile electronic device test system 100 may be configured to optionally include an illumination part 140, an X-RAY photographing part 150, and a filter part 160.

First, the camera part 110 forms a photographing area using a camera mounted to a photographing box. That is, the camera part 110 may serve to form the photographing area with the camera focusing on a predicted site on which a mobile electronic device inserted into an automated device is to be seated in the future.

The photographing box may be a predetermined space in which one or more cameras are mounted and accommodated, depending on the implementation environment, and may be implemented in an automated device into which a mobile electronic device is inserted for secondhand purchase in the present disclosure.

The photographing area may be formed by causing the camera to focus on a desired point of the mobile electronic device, such as one surface, side surface, or corner surface of the mobile electronic device to be seated in the future. In addition, the photographing area may be formed in length and width that change flexibly according to the type (folder type, flip type, or slide type) of the mobile electronic device to be seated in the future.

The position alignment part 120 moves the mobile electronic device inserted through an inlet of the automated device to the photographing area. That is, the position alignment part 120 may serve to move and seat the mobile electronic device, inserted by the user into the automated device for secondhand purchase, to the formed photographing area.

In moving to the photographing area, the position alignment part 120 may move the mobile electronic device while correcting the pose, direction, balance, and the like of the mobile electronic device, so that the camera may focus on a desired, arbitrary point of the mobile electronic device.

The position alignment part 120 may move the mobile electronic device from the location at which the mobile electronic device is inserted into the automated device to the photographing area using, for example, mechanical power or electromagnetic power.

In addition, when the mobile electronic device is inserted into the automated device in a closed state, the position alignment part 120 may open the mobile electronic device according to the type (flip type or slide type) using mechanical power or electromagnetic power and move the opened mobile electronic device to the photographing area.

That is, the position alignment part 120 may include a repositioning part, a device manipulation part, and a device control part, and may move the mobile electronic device to be in a prescribed pose, then mechanically or electrically open the mobile electronic device with mechanical power or electromagnetic power, and move the open mobile electronic device to the photographing area. Also, the position alignment part 120 may close an open mobile electronic device and then move the mobile electronic device to the photographing area, as necessary.

The repositioning part may perform a function to move the mobile electronic device to a position and direction to be in the prescribed pose, such that the mobile electronic device may be mechanically or electrically open and closed.

The device manipulation part may perform an opening/closing function to fold or unfold a folder/flip-type mobile electronic device, and perform a function to push or pull to open and close a slide-type mobile electronic device.

The device control part may control the repositioning part and the device manipulation part so that the function of repositioning the mobile electronic device and folding and unfolding the mobile electronic device may be smoothly performed.

Preferably, if the camera part 110 is capable of forming a photographing area centered on an expected position in the automated device into which a mobile electronic device is inserted, the position alignment part 120 may implement the invention while minimizing the movement of the mobile electronic device.

As the mobile electronic device is moved to the photographing area, the control part 130 controls the camera such that photographing is performed on a specific region of the mobile electronic device, so as to examine the specific region through a photographed image. That is, the control part 130 may perform a test on the mobile electronic device by controlling the photographing of a specific region of the mobile electronic device, which is typically easy to damage.

The specific region of the mobile electronic device, which is typically easy damage, may be, for example, corner surfaces of the mobile electronic device that hit the ground in case of fall, a display surface that is scratched, or the like.

In the photographing control, the control part 130 may designate and control a camera to perform the photographing or reposition and control the camera based on the width or length of the mobile electronic device moved to the photographing area. That is, the control part 130 may specifically designate a camera used for photographing or change the position of a camera, considering that the length and width of a new type of mobile electronic device change noticeably when the mobile electronic device is open, different from a general type of device.

In some embodiments, the mobile electronic device test system 100 may provide illumination incident to the photographing area.

To this end, the mobile electronic device test system 100 may be configured to optionally include the illumination part 140.

That is, the illumination part 140 may serve to generate illumination toward the photographing area.

The illumination part 140 may generate direct illumination according to the focus of the camera within the photographing area or generate indirect illumination incident to the photographing area as reflected from a side wall of the photographing box.

When the camera focuses on a desired region of the mobile electronic device, the illumination part 140 may employ a direct illumination scheme of generating illumination on a side surface of the photographing box directly without reflection.

On the other hand, when the camera does not focus on a desired region and thus, reflection on a side surface of the photographing box is needed, the illumination part 140 may employ an indirect illumination scheme of causing illumination to be also reflected.

In particular, the illumination part 140 may determine an angle of emission of the direct illumination or an angle of reflection of the indirect illumination from the side wall in consideration of the width or length of the mobile electronic device moved to the photographing area.

That is, the illumination part 140 may illuminate the whole of a new type of mobile electronic device having a new width or length as it is open, for example, by increasing the angle of emission of the direct illumination or increasing the angle of reflection of the indirect illumination based on the increasing width or length, different from a general type of mobile electronic device.

In some embodiments, the mobile electronic device test system 100 may provide illumination for a wider area by generating illumination in a direction of a top end of the photographing box.

To this end, the top end of the photographing box may be implemented with one or more surfaces having respective angles.

Under such circumstances, the illumination part 140 may generate the indirect illumination toward a surface having an angle that reflects the indirect illumination to the specific region of the mobile electronic device, among the one or more surfaces.

Through this, the illumination part 140 may generate indirect illumination for the entire photographing box by reflection on the surfaces having various angles, so that the photographing using the camera may be smoothly performed.

In some embodiments, the mobile electronic device test system 100 may provide a radiograph by X-RAY.

To this end, the mobile electronic device test system 100 may be configured to optionally include the X-RAY photographing part 150.

That is, the X-RAY photographing part 150 may generate a radiograph by radiating an X-RAY toward the mobile electronic device moved to the photographing area according to a predetermined radiation condition.

Here, the radiation condition is about a radiation power and a radiation time of the X-RAY according to the positions of the mobile electronic device and a component in the mobile electronic device.

The X-RAY photographing part 150 may appropriately determine the X-RAY radiation condition depending on a mobile electronic device, thereby generating a radiograph through which the states of components in the mobile electronic device may be examined accurately.

In addition, in some embodiments, the mobile electronic device test system 100 may be configured to optionally include the filter part 160.

The filter part 160 may be selectively used based on the transmittance of the X-RAY in the mobile electronic device. That is, the filter part 160 may be a means that is optionally employed according to the transmission degree of the mobile electronic device by the X-RAY radiated by the X-RAY photographing part 150.

For example, when the X-RAY transmittance is too high and a radiograph is not clear, the filter part 160 may have a filter medium type or installation slope for use selected according to the transmittance, if used.

The medium type may include, for example, air (an air layer), a metal plate, or the like according to the refraction and diffraction characteristics of the medium.

The installation slope of the medium may be designed so as to physically adjust the degree to which the X-RAY is transmitted through the filter.

According to an embodiment of the present disclosure, it is possible to provide a method of testing a mobile electronic device in an automated device and a mobile electronic device test system, that may trade in a mobile electronic device having a new size and operation method and perform an examination on the trade-in mobile electronic device.

Mobile electronic devices, for which a new test method is to be proposed, are of three types: folder type, flip type, and slide type.

A folder-type mobile electronic device may refer to a mobile electronic device that is folded and unfolded vertically.

A flip-type mobile electronic device may refer to a mobile electronic device that is folded and unfolded laterally.

A slide-type mobile electronic device may refer to a mobile electronic device of which a portion (a portion of a top or bottom or the whole) is pushed and moved laterally or vertically or is rotated at a predetermined angle. The slide-type mobile electronic device may include a mobile electronic device of which a portion may be pulled out of or pushed in a main body thereof.

The mobile electronic device test system 100 of the present disclosure may be intended for these three types of mobile electronic devices as well as for mobile electronic devices having a structure in which one or more displays attached thereto are folded or move, in addition to a function that an instrument body is simply folded or slides to move.

The mobile electronic device test system 100 is intended for a mobile electronic device with a display folded and unfolded at an angle of up to 180 degrees or two displays horizontally moving up, down, left, and right.

The mobile electronic device test system 100 may suggest a method of testing a display, a function (movement) and a state (natural motion) of a folder/flip/slide-type mobile electronic device in various ways.

A new type of mobile electronic device differs from existing mobile electronic devices in size or shape, and in particular, has a big difference in the number of displays, the flexibility of a display, instrument gears (e.g., a hinge structure, etc.) that implement new motions, and a flexible printed circuit board (PCB) that moves in the mobile electronic device.

The flexible PCB may be a component for interfacing several displays controlled and interlinked through a micro controller unit (MCU) of the mobile electronic device.

The flexible PCB does not need to move if a display is fixed to one main body as in existing mobile electronic devices. However, if a separate display moves when a mobile electronic device is unfolded into a new shape, moved, or rotated, the flexible PCB connecting the display interlinked to the MCU needs to perform a function of extending or reducing some sections, and thus, whether the flexible PCB is damaged may be a significant factor according to the structure, shape, and position.

The mobile electronic device test system 100 of the present disclosure may include a method of inspecting individual LCDs of a mobile electronic device.

Existing automated state analysis technology may inspect some display states or basic appearance states of a new type of mobile electronic device, but has difficulties in inspecting the operating states of several displays used in a folder/flip/slide-type mobile electronic device in practice and an operating gear unit for functional operations.

Currently, two or three displays are used in new mobile electronic devices depending on the functions, but the number of displays may continuously increase.

The mobile electronic device test system 100 may provide a new method of inspecting several displays.

Although a different number of displays are used for each of the folder-type, flip-type, and slide-type mobile electronic devices, the displays typically include a main display and a sub-display.

The main display may be designed to be folded at an angle of up to 180 degrees.

When the main display is folded, the sub-display displays some state information of the mobile electronic device or provides a display function in a mini-state, and thus, the sub-display may be disposed in a different direction from the main display. However, the slide-type mobile electronic device has the main display and the sub-display disposed in the same direction but in a manner that the sub-display is exposed when the main display slides, and thus, a different display test method should be used according to each type.

That is, the display test method should be changed according to the type, and the inspection point (location) should also be changed according to the type.

The folder-type mobile electronic device has a structure in which the main display is folded vertically, and a display test in a state in which the main display is fully unfolded and a display test in a state in which the main display is folded are performed.

In the folder-type mobile electronic device, the main display and the sub-display are positioned in opposite directions. For this reason, the mobile electronic device test system 100 may ask a user (customer) to insert the mobile electronic device with the main display unfolded into the automated device that trades in and stores a mobile electronic device, and perform a test on the main display. After testing the main display, the mobile electronic device test system 100 may perform a test on the sub-display as the user (customer) reinserts the mobile electronic device with the main display folded.

Alternatively, the mobile electronic device test system 100 may inspect the states of the main display and the sub-display by performing a function of folding and unfolding the mobile electronic device inserted into the automated device using a robotic device. The robotic device may enable control in XYZ directions.

Even in the case of a flip-type mobile electronic device, the mobile electronic device test system 100 may perform a test on the main display and the sub-display of the mobile electronic device in the same manner as a folder-type mobile electronic device.

In the case of a slide-type mobile electronic device, the mobile electronic device may be inserted in a sliding state to inspect the state of the display, but the inspection of the state of the display may not be possible when the slide returns or a portion of the slide is less open according to a slide gear state or insertion situation.

The mobile electronic device test system 100 may include a robotic device installed in the automated device into which a mobile electronic device is to be inserted and maintain a sliding state of the mobile electronic device by means of the robotic device.

In addition to the method of inspecting the state of a display for each type, a software method of inspecting the state of a display in practice is as follows.

For existing displays, the state of only one main display needs to be tested, but the displays of a new type of mobile electronic device may have different functions and specifications. In particular, since the main display of a new type of mobile electronic device provides a multi-split-display function although it is one, a function test on the split display needs to be performed.

In addition, a new type of mobile electronic device needs a new concept of state analysis technology for a folding portion. In addition, since a new type of mobile electronic device requires a different maintenance cost depending on the abnormal state of the display surface, the state of the display surface may be evaluated by a criterion different from that for the display state of the existing mobile electronic devices.

Various types of displays may be applied in the future with the development of displays, and thus, new types of mobile electronic devices require separate criteria for a state abnormality according to a model to be applied and a display type and a maintenance method/damage level according to a state abnormality.

Since the sub-display has a different size and resolution function for each of the folder/flip/slide-type mobile electronic devices, a state analysis with respect to the position, size, resolution, and purpose should be newly applied according to the type of sub-display in a new type of mobile electronic device.

The mobile electronic device test system 100 may include a method of inspecting a gear state of folder-type, flip-type, and slide-type mobile electronic devices.

The mobile electronic device test system 100 may determine that there is a problem in an actual function if an operating gear unit does not operate normally or does not move according to a given specification even during operation.

The most important functions of mobile electronic devices may be communication, display, and touch functions. The mobile electronic device test system 100 may first check the display and touch functions among those functions and determine whether the operating gear unit is normal.

The mobile electronic device test system 100 may perform an operation of folding/unfolding the display in practice and verify whether the basic function of the operating gear unit is normal.

The mobile electronic device test system 100 may include a method of inspecting the state of the operating gear unit through a camera as a mobile electronic device is inserted into an automated device, while maintaining the state when the display is unfolded and folded by the user, and a method of inspecting the state of the operating gear unit by unfolding the display of the mobile electronic device inserted into the automated device using a robotic device.

The mobile electronic device test system 100 may inspect the operational function of the operating gear unit and then inspect the detailed quality state of the operating gear unit.

In particular, the mobile electronic device test system 100 may inspect the stiffness of the operating gear unit during operation (inspect gear wear and risk of damage), operation noise, horizontal balance of both ends, and the like.

The mobile electronic device test system 100 may inspect the operating gear unit for a foreign substance that may be caught therein.

Depending on the usage environment of a mobile electronic device, various foreign substances may enter the operating gear unit through gaps thereof, and the mobile electronic device test system 100 may utilize a method of inspecting whether a foreign substance exists through the camera and a method of inspecting the states of instrument and internal components in the mobile electronic device using X-RAY radiography.

In the case of using X-RAY radiography, whether a foreign substance exists in the operating gear unit may be inspected through a comparative verification with a database related to normal mobile electronic devices.

Unlike the typical AI learning method through deep learning, the mobile electronic device test system 100 may easily inspect whether a foreign substance exists even without a lot of base data.

The mobile electronic device testing system 100 may include a method of inspecting folder-type, flip-type, and slide-type mobile electronic devices.

The mobile electronic device test system 100 proposes a new inspection method that is applicable to folder-type, flip-type, and slide-type mobile electronic devices as well as the existing types of mobile electronic devices.

The mobile electronic device test system 100 may automatically operate and inspect the hinge structures of folder-type, flip-type, and slide-type mobile electronic devices.

The mobile electronic device test system 100 may inspect a mobile electronic device using a robotic arm.

The mobile electronic device test system 100 may inspect the mobile electronic device using a mechatronic instrument (3-axis control).

The mobile electronic device test system 100 may test the mobile electronic device by moving the mobile electronic device to a space where a predetermined test may be performed.

The mobile electronic device test system 100 may include a noise measuring device for inspecting gear (hinge) operating noise.

The mobile electronic device test system 100 may inspect the detailed state of the hinge by adjusting the torque for an operation of the robotic arm or instrument controlling object that operates a torque control structure (hinge) at a predetermined position.

The hinge has the characteristic of moving to a final position by its own power (power in the moving direction of the hinge) even if a particular force is not applied thereto when reaching a predetermined threshold position. However, if a foreign substance or a problem with the hinge instrument occurs, the characteristic of the hinge moving by its own power may not be normally exhibited. For example, the hinge may be stopped in the middle by a foreign substance or may operate too early and provide an impact on the entire hinge instrument.

The mobile electronic device test system 100 may inspect the detailed state of the hinge even for a mobile electronic device having a structure that releases a hinge stroke when a predetermined region is pressed.

The mobile electronic device test system 100 may perform a state analysis of the entire appearance at once using a three-dimensional (3D) scanner (including 2D DUAL CAMERA technology) for scanning and analysis including corners when rounded, that is, greatly curved outer corners and a display are embedded in the surface.

When the 3D scanner is used, vertical alignment in the direction of scanning is important, and thus, the mobile electronic device test system 100 may cause the seated mobile electronic device to be in alignment.

If the mobile electronic device is not in alignment, the mobile electronic device test system 100 may compensate by assigning a correction value for this to the 3D scanning analysis function.

The mobile electronic device test system 100 may perform analysis using X-RAY radiography and analysis learning function in combination, as a method of verifying internal damage, replacement, and repair states and external damage states of a mobile electronic device.

The mobile electronic device test system 100 may verify the internal and external states of the mobile electronic device using X-RAY radiography by an X-RAY photographing part built into the automated device. A shielding function may be added to the X-RAY photographing part.

The X-RAY photographing part may be positioned in a predetermined space that is safe, and the mobile electronic device test system 100 may move a mobile electronic device to the predetermined space where the X-RAY photographing part is positioned and perform photographing.

The X-RAY photographing part may be designed to be positioned at a rear end, top end, or bottom end in the predetermined space, and may be fixed in the predetermined space as the shielding function is added thereto.

The mobile electronic device test system 100 may include an analysis algorithm with big data-based data on normally shipped mobile electronic devices and analysis and training data for each abnormal region.

Since the X-RAY radiography circumstance varies according to the thickness, size, and material of a mobile electronic device to be analyzed, the mobile electronic device test system 100 may have an optimized X-RAY radiation level for each mobile electronic device.

The mobile electronic device test system 100 may include a method of more precisely specifying a light spectrum emitted for each display color through an optical emission spectrometer (light spectrum analyzer), as a more advanced method than simple display state analysis through a display color test.

Atypical display test analyzes RGB color expression, black spots, discoloration, and the like using an image through eyes or a camera and thus, has difficulties in verifying the aging state of each cell in the display in practice.

That is, a typical display test may have difficulties in verifying the aging state of the display through a naked eye of a real person or the resolution of a camera (the optical recognition of CCD or CMOS) and also have difficulties in determining the condition of a brand-new or used product.

As a method of solving this, the mobile electronic device test system 100 may analyze the aging state of the display by analyzing the light spectrum emitted from the display.

The mobile electronic device test system 100 may include a photographing box including an illumination part (the X-RAY photographing part).

The photographing box may be used for direct illumination and indirect illumination.

The photographing box may adjust the position of an LED for indirect illumination according to the shape and size.

When the photographing box has a narrow width, the photographing box may be configured to have an adjustable height to provide indirect illumination and illumination functions for photographing.

The photographing box may have a multi-angle structure (surfaces) at the top end, to more advantageously generate indirect illumination.

The photographing box has a wall color to eliminate reflected light for generating indirect illumination and a reflected image by the mobile electronic device.

The photographing box may include an LED illumination having several wavelength bands.

The LED illumination may use three types of wavelength bands, for example, 3000K, 6000K, and 10,000K.

The photographing box may select a wavelength band of the LED illumination according to the LCD state by the color and wavelength and the surface scratch analysis.

The photographing box is movable and may apply the dual camera method.

To analyze the external condition of a mobile electronic device, the photographing should be performed in a total of "6" or more directions (basic "6" directions of up/down/left/right/front/rear, and diagonal directions, etc.).

To verify the external condition of a mobile electronic device, an image photographing device (e.g., a camera, etc.) for photographing a surface to be photographed and appropriate illumination for illuminating the surface to be photographed are required.

In general, when a person verifies the external condition of a mobile electronic device, the person may experience inconvenience in verifying the external condition by checking the external condition while holding and changing the direction of the mobile electronic device according to ambient illumination.

The mobile electronic device test system 100 may enable easy verification of marks, cracks, stains, scratches, and the like of the surface to be photographed according to the state and direction of ambient illumination (natural light, general illumination, etc.).

The mobile electronic device test system 100 may provide appropriate illumination and angles so as to produce an environment like one in which a person views a number of surfaces of a mobile electronic device placed in a predetermined space while changing the direction according to the illumination situation

The mobile electronic device test system 100 may perform AI analysis based on an image obtained by photographing the surface to be photographed of the mobile electronic device.

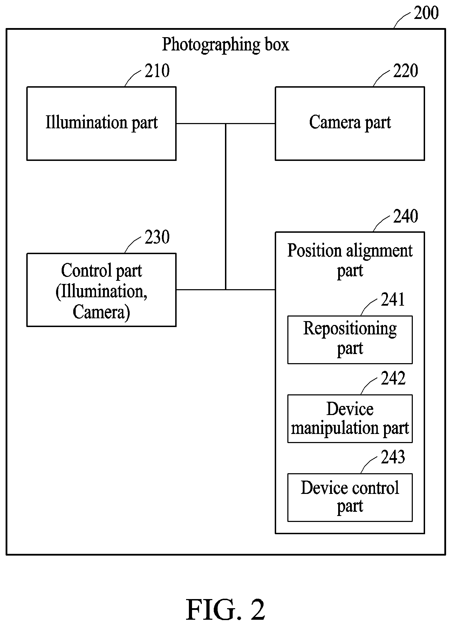

FIG. 2 is a diagram of the structure of a photographing box according to the present disclosure.

A photographing box 200 is intended to analyze the outer appearance of a mobile electronic device, and may include an illumination part 210, a control part 230, a camera part 220, and a position alignment part 240, as shown in FIG. 2.

The illumination part 210 may generate illumination that operates together with the camera part 220 as a mobile electronic device reaches a prescribed position in the photographing box 200, and may be implemented as one or more having a predetermined length, wavelength, and output to generate respective illumination.

The camera part 220 may be configured as a camera for photographing a surface to be photographed. A plurality of cameras may be implemented to photograph a mobile electronic device in a plurality of directions, respectively, or a single camera may be implemented if the camera is capable of photographing while moving around a mobile electronic device through mechanical control.

In addition, the camera may have a specific lens (a wide-angle lens, etc.), resolution, view angle, and the like set according to a surface to be photographed and content to be photographed.

The control part 230 may function to adjust the output power and on-time of the illumination to obtain a desired image of the surface to be photographed and determine camera setting values for generating a photographing environment of the camera, through control over the illumination part 210 and the camera part 220.

The control part 230 may reduce the operation time by installing a camera environment during initialization in advance, rather than setting the camera environment every time.

The position alignment part 240 may move the mobile electronic device to a prescribed position (e.g., the center of the photographing box 200).

The position alignment part 240 may reposition the mobile electronic device so as to perform photographing through interlinkage with the camera with a mechanical control function added.

The position alignment part 240 may be configured to include a repositioning part 241, a device manipulation part 242, and a device control part 243.

The repositioning part 241 may perform a function to move the mobile electronic device to a position and direction to be in the prescribed pose, such that the mobile electronic device may be mechanically or electrically open and closed.

The device manipulation part 242 may perform an opening/closing function to fold or unfold a folder/flip-type mobile electronic device, and perform a function to push or pull to open and close a slide-type mobile electronic device.

The device control part 243 may control the repositioning part 241 and the device manipulation part 242 so that the function of repositioning the mobile electronic device and folding and unfolding the mobile electronic device may be smoothly performed.

The position alignment part 240 may mechanically or electrically open and close the mobile electronic device in consideration of the type of the mobile electronic device, and then move the mobile electronic device to the photographing area.

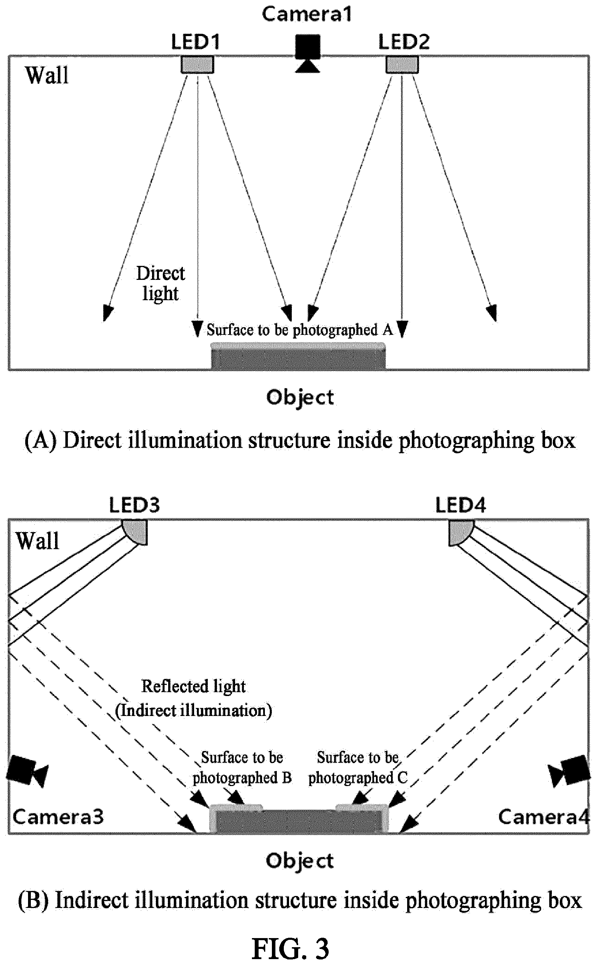

FIG. 3 is a detailed diagram of the structure of the inside of a photographing box.

(A) of FIG. 3 shows an example of a photographing box of a direct illumination structure for photographing a surface to be photographed A of Object, which is a mobile electronic device, using Camera 1 positioned on the ceiling, in a state of illuminating with direct light from LEDs 1 and 2 on the ceiling.

(B) of FIG. 3 shows an example of a photographing box of an indirect illumination structure for photographing surfaces to be photographed B and C of Object, which is a mobile electronic device, using Cameras 3 and 4 positioned on the wall to be spaced apart from each other, in a state of LEDs 3 and 4 illuminating toward the wall and indirectly illuminating with reflected light.

The photographing box may determine the direction and type of illumination so that a surface to be photographed of the mobile electronic device may be photographed well.

(A) of FIG. 3 shows a case where the illumination incident to the surface to be photographed is direct illumination, and (B) of FIG. 3 shows a case where the illumination incident to the surface to be photographed is indirect illumination.

In the case of photographing fine scratches on the surface of a mobile electronic device, direct illumination that scatters somewhat well on the surface may be used.

To photograph the side of a mobile electronic device, indirect illumination that has a constant state of illumination in a region to be illuminated, rather than causing light reflection from the side, may be used.

The photographing box may obtain an image of the surface to be photographed by stably photographing the surface to be photographed using direct illumination and indirect illumination appropriately.

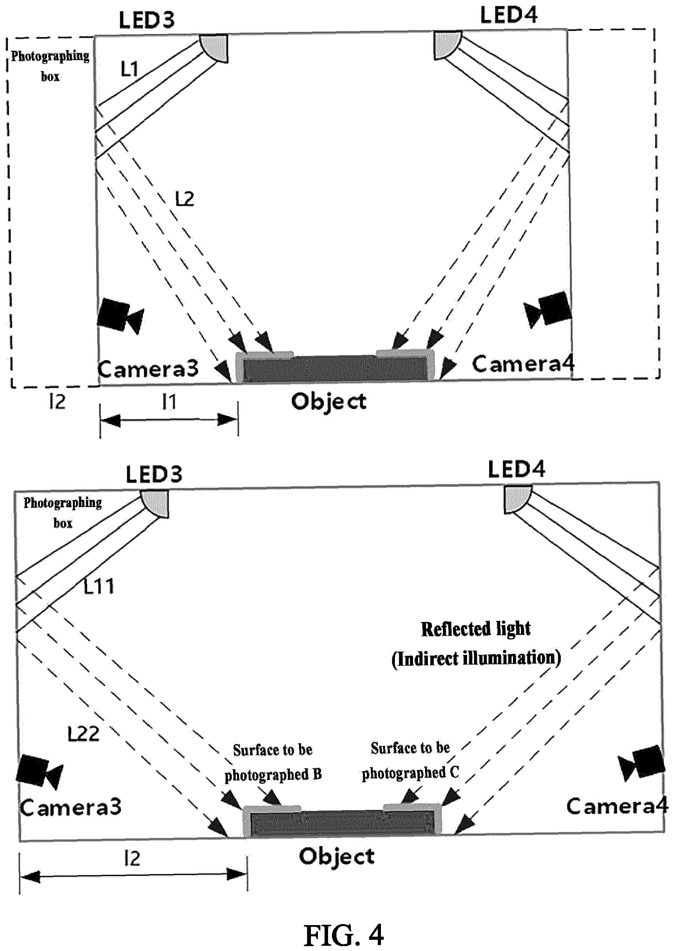

FIG. 4 is a diagram illustrating indirect illumination according to the lateral dimension of a photographing box.

(A) of FIG. 4 shows an example of a case where the desired surface to be photographed is not illuminated as a whole since light emitted from LEDs 3 and 4 toward the wall and reflected from the wall has a large angle of reflection (∠L1L2) when the distance between the wall and Object, which is a mobile electronic device, is relatively short as 11.

On the other hand, (B) of FIG. 4 shows an example of a case where the desired surface to be photographed is illuminated as a whole since light emitted from LEDs 3 and 4 toward the wall and reflected from the wall has a small angle of reflection (∠L11L22) when the distance between the wall and Object, which is a mobile electronic device, is relatively long as 12.

FIG. 4 shows states in which indirect illumination is used according to the lateral dimension of the photographing box.

If the lateral dimension of the photographing box is small, it may be difficult to implement indirect illumination. That is, if the lateral dimension of the photographing box is small, illumination may not be reflected but work like direct light due to the short distance of 11 even when the direction of illumination is set to cause reflection from the wall.

Accordingly, the photographing box may implement a reflecting wall with a material (including color) having the characteristic of reducing the amount of light of the illumination or the amount of reflection.

In addition, the total internal illuminance of the photographing box decreases when the amount of light is reduced. Thus, the photographing box may increase the exposure time of the camera for photographing.

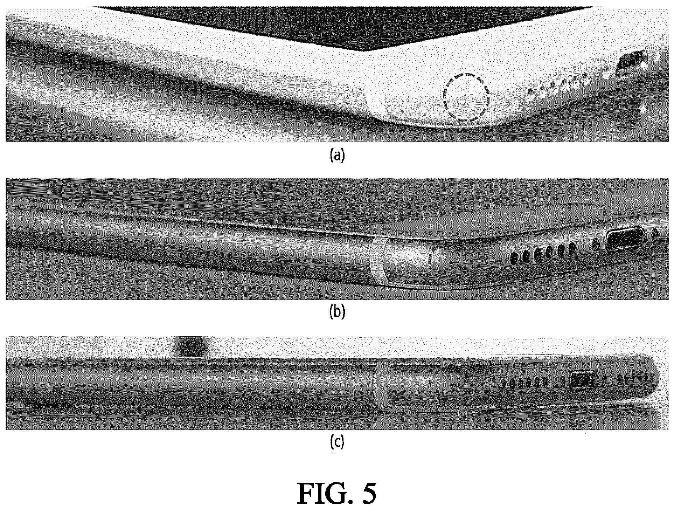

FIG. 5 illustrates photographed images (gold-type color) of sides (corners) under direct illumination and indirect illumination.

FIG. 5 shows a comparison of a photographed image of a specific region of a mobile electronic device, photographed with a camera under direct illumination in a photographing box, and photographed images of the specific region of the mobile electronic device, photographed with the camera under indirect illumination.

(a) of FIG. 5 shows an example of a photographed image of a side under direct light and illumination with a poor reflection characteristic, (b) of FIG. 5 shows an example of a photographed image of the side, photographed with a camera at a higher position than the mobile electronic device under indirect illumination, and (c) of FIG. 5 shows an example of a photographed image of the side, photographed with a camera at the same height as the mobile electronic device under indirect illumination.

(a) of FIG. 5 is an image photographed when the mobile electronic device in gold is radiated with direct illumination, wherein the image was photographed at such a level that the color state of the mobile electronic device and the mark (dotted circle) in a photographing area are unrecognizable.

That is, in the case of (a) of FIG. 5, the use of direct light causes a loss of the original color due to the coloring characteristic of the mobile electronic device and the reflection characteristic according to the color, and the reflection characteristic may hinder analysis of a defective element in the appearance.

On the other hand, (b) and (c) of FIG. 5 are photographed images when indirect illumination is radiated, wherein the images were photographed at such a level that the state between the position of the mobile electronic device and the position of the camera and the color of the mobile electronic device are recognizable.

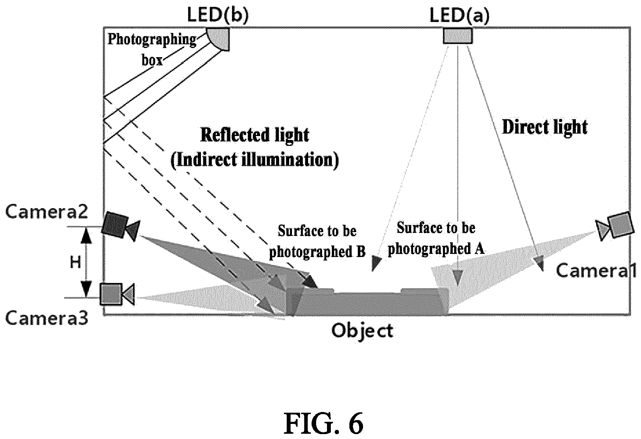

FIG. 6 is a diagram of the position of a camera for photographing a side (corner) under direct illumination and indirect illumination.

FIG. 6 shows an example of photographing a surface to be photographed A of Object, which is a mobile electronic device, using Camera 1 positioned on the right wall, in a state of illuminating with direct light from LED (a) on the ceiling.

At the same time, FIG. 6 shows an example of photographing a surface to be photographed B of Object, which is the mobile electronic device, using Camera 2 positioned on the right wall, in a state of illuminating toward the wall from LED (b) on the ceiling and indirectly illuminating with indirect light resulting therefrom.

In addition, FIG. 6 shows an example of photographing the corner of the surface to be photographed B, using Camera 3 positioned lower than Camera 2 by a distance H to photograph the corner of the surface to be photographed B well.

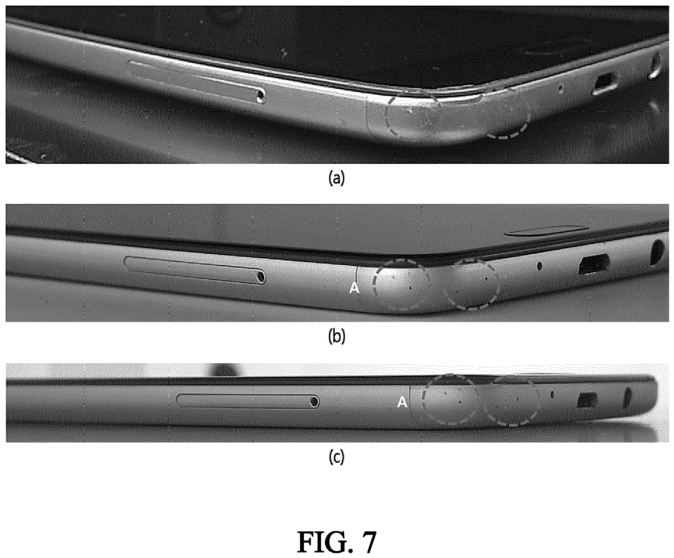

FIG. 7 illustrates photographed images (silver-type color) of sides (corners) under direct illumination and indirect illumination.

(a) of FIG. 7 shows an example of a photographed image of a side under direct light and illumination with a poor reflection characteristic, (b) of FIG. 7 shows an example of a photographed image of the side, photographed with a camera at a higher position than the mobile electronic device under indirect illumination, and (c) of FIG. 7 shows an example of a photographed image of the side, photographed with a camera at the same height as the mobile electronic device under indirect illumination.

Comparing (a) of FIG. 7 with (b) and (c) of FIG. 7, it is impossible to accurately analyze the actual marks due to the reflection and scattering by reflected light in (a) of FIG. 7.

However, it is possible to clearly verify the marks on the surface to be photographed in (b) and (c) of FIG. 7.

Further, comparing (b) and (c) of FIG. 7, Point A in (b) of FIG. 7 and Point A in (c) of FIG. 7 may exhibit completely different light reflections.

It may be learned that when the capturing angle between the photographing area of the mobile electronic device and the camera is large, some regions have reflection characteristics even when indirect light is used.

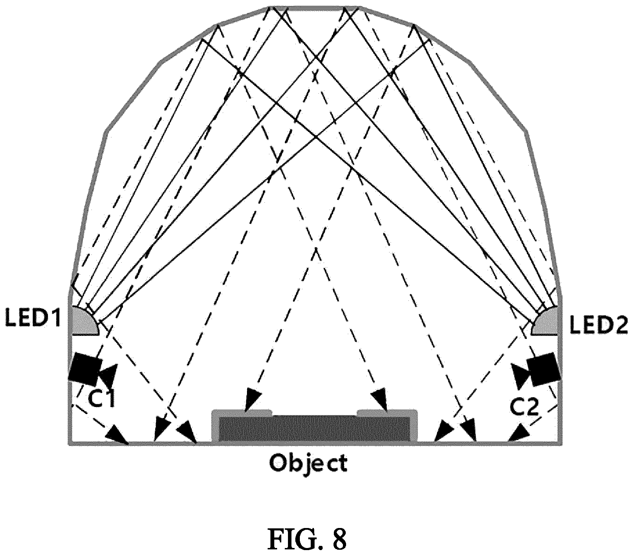

FIG. 8 is a diagram of the current state of indirect illumination according to the shape, illumination position, and illumination direction of a photographing box.

To obtain desired illumination characteristics, the position and direction of illumination should be changed according to the structure and shape of a photographing box, even if the same illumination structure is used.

FIG. 8 shows an example of photographing a surface to be photographed of Object, which is a mobile electronic device, using Cameras 1 and 2 positioned on the wall to be spaced apart from each other, in a state of LEDs 1 and 2, respectively positioned on the wall, illuminating toward the top end of a photographing box configured with surfaces having different angles and indirectly illuminating the entire photographing box with reflected light resulting therefrom.

As shown in FIG. 8, when the shape of a photographing box is a rectangular structure with a narrow lateral width, it is difficult to obtain desired reflection, that is, indirect illumination. Thus, the photographing box according to the present disclosure may be implemented with a greater height of the top end and surfaces having one or more angles to cause various reflections, and may obtain indirect illumination by fixing the direction so that the illumination may proceed toward the top end.

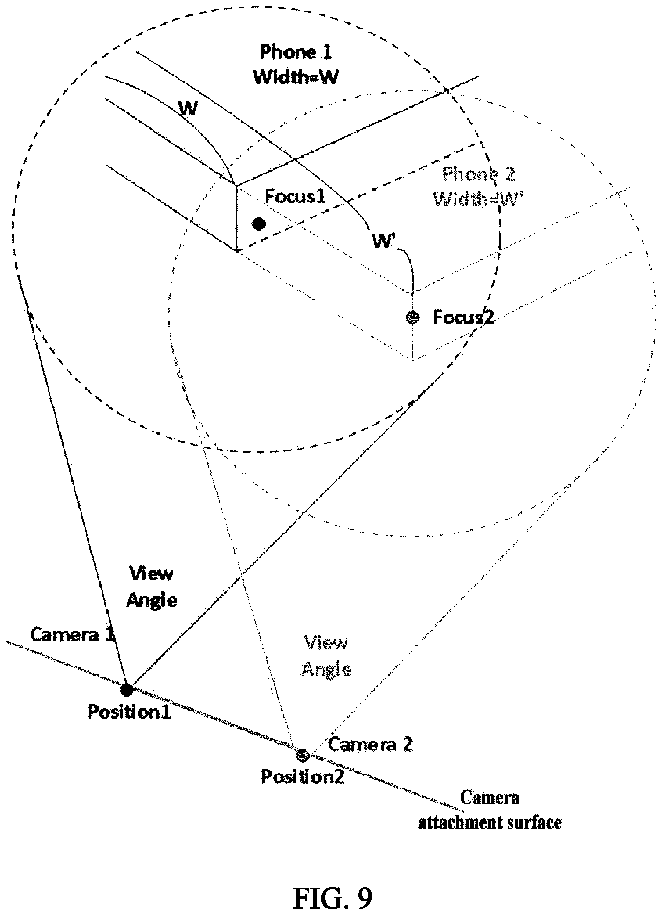

FIG. 9 is a diagram illustrating the view focus for each position at which a camera is attached according to the size of a mobile electronic device.

FIG. 9 shows an example of photographing corners of mobile electronic devices with various widths and lengths using Cameras 1 and 2 that are provided at Positions 1 and 2 on a camera attachment surface and have respective focuses and view angles.

With reference to FIG. 9, photographing Phone 1 having a width W using Camera 1 having Focus 1 formed on the corner and photographing Phone 2 having a width W" using Camera 2 having Focus 2 formed on the corner are described.

As shown in FIG. 9, Camera 1 provided at Position 1 and Camera 2 provided at Position 2 spaced apart from Position 1 may be mounted on the camera attachment surface in a photographing box.

The original focus of Camera 1 is FOCUS 1, but in the case of a mobile electronic device having a greater width, the focus of Camera 1 should be moved to FOCUS 2. In this case, it is impossible to achieve the exact focus with Camera 1 provided at Position 1, and thus, Camera 1 may need to be repositioned.

In repositioning, accuracy in new position or length may be required since the camera is supposed to be fixed in interlocking with illumination on the wall of a specific space.

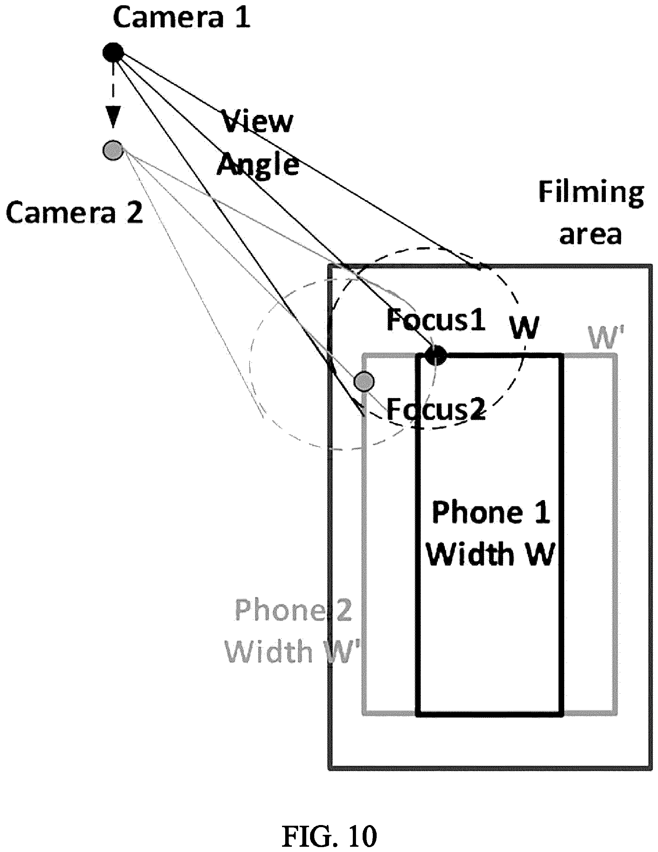

FIG. 10 is a diagram illustrating the position of a camera according to the width of a mobile electronic device.

FIG. 10 shows an example of stably photographing a desired surface to be photographed of Phone 2 by changing a camera to be used for photographing from Camera 1 having Focus 1 to Camera 2 having Focus 2, when a mobile electronic device seated in a photographing area (or filming area) is changed from Phone 1 having a width W to Phone 2 having a width W".

When a mobile electronic device having a variable width is placed in a photographing area within a specific space, the photographing box may photograph the seated mobile electronic device through Camera 1 provided at Position 1.

However, when a flip-type mobile electronic device is seated and unfolded in the photographing area, the width of the mobile electronic device increases twice compared to a general-type mobile electronic device, and thus, the photographing box may not accurately photograph the corner portion of the flip-type mobile electronic device. This is because the position, view angle, focus, and the like of the camera are implemented in the photographing box according to the average width of general-type mobile electronic devices.

That is, since the focus of the previously implemented camera is inappropriate, the photographing box may have low photographing precision and in particular, have difficulties in analyzing the corner portion that is likely to be worn, marked, or cracked.

Accordingly, the photographing box may adjust the view angle by repositioning Camera 1 from Position 1 to Position 2, to accurately photograph the location corresponding to an increasing width.

Alternatively, the photographing box may install separate Camera 2 at Position 2 and photograph a corner portion of a mobile electronic device having a different width using Camera 2.

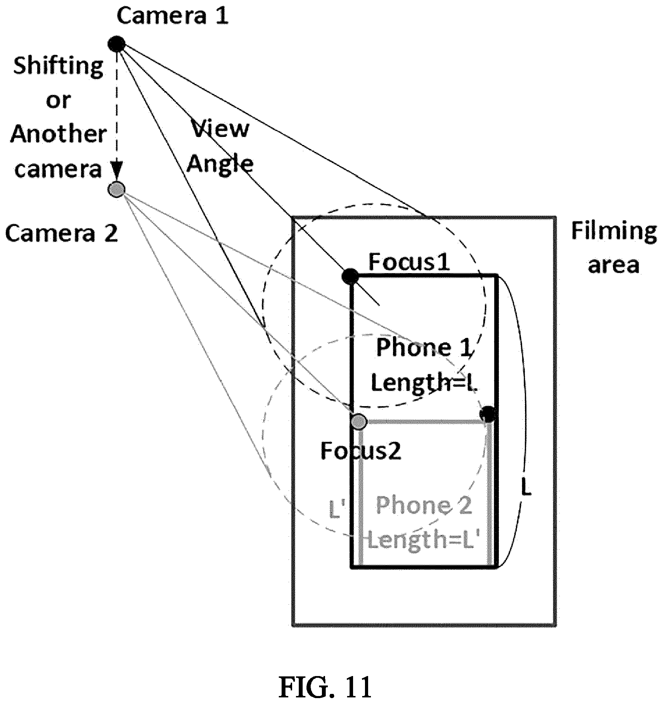

FIG. 11 is a diagram illustrating the position of a camera according to the length of a mobile electronic device.

FIG. 11 shows an example of stably photographing a desired surface to be photographed of a mobile electronic device as folded or unfolded, by changing a camera to be used for photographing from Camera 1 having Focus 1 to Camera 2 having Focus 2, when a mobile electronic device seated in a photographing area (or filming area) is folder-type and its length is changed from folded length L to unfolded length L'.

When a mobile electronic device having a variable length is placed in a photographing area within a specific space, a photographing box may photograph the seated mobile electronic device through Camera 1 provided at Position 1.

However, if the length of the mobile electronic device seated in the photographing area is relatively great or small compared to a general-type mobile electronic device, the photographing box may have issues that the originally set focus and view angle of Camera 1 are inappropriate.

To solve this, the photographing box may mechanically reposition Camera 1 to a position according to the relatively small or great length of the mobile electronic device to perform photographing.

Alternatively, the photographing box may additionally install separate Camera 2 having a view angle suitable for the mobile electronic device seated in the photographing area, recognize the model of the mobile electronic device seated in the photographing area, and perform photographing.

The mobile electronic device test system 100 may be configured to include an X-RAY photographing part.

The mobile electronic device test system 100 may quickly verify the model of the mobile electronic device through the X-RAY photographing part.

The mobile electronic device test system 100 may quickly verify whether the mobile electronic device needs to be repaired and has components through the X-RAY photographing part.

The mobile electronic device test system 100 may quickly verify the state of the internal components of the mobile electronic device through the X-RAY photographing part.

The mobile electronic device test system 100 may quickly verify the appearance (LCD, instrument, etc.) of the mobile electronic device through the X-RAY photographing part.

The mobile electronic device test system 100 may quickly check a radiograph of the mobile electronic device using an X-RAY radiography function, thereby quickly analyzing and verifying the internal state that is generally difficult to check with a naked eye or camera.

The mobile electronic device test system 100 may be used in a purchase device and an examination center, and may implement photographing in less than 5 seconds, imaging in less than 5 seconds, and analysis (AI applied) in 5 seconds.

The mobile electronic device test system 100 may be configured to include an X-RAY photographing part having an X-RAY radiography function.

The mobile electronic device test system 100 may provide an X-RAY light source control function for various transmission characteristics of X-RAY.

The mobile electronic device test system 100 may include a filter photographing method in case of being impossible to provide a desired transmission characteristic through light source control of X-RAY.

The mobile electronic device test system 100 may adjust the transmittance by providing a slope to a filter, in addition to a scheme using the medium and thickness of the filter.

The method of providing a slope to the filter may be used to obtain different transmittances with a single transmission when metal and synthetic resin are together in a photographing area.

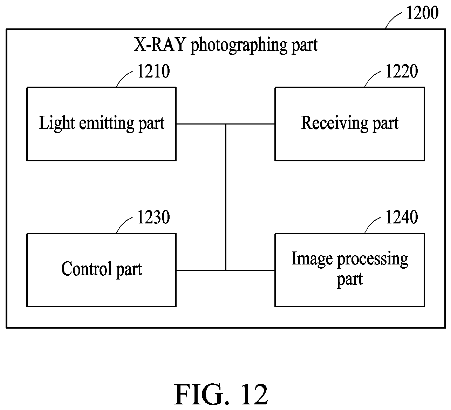

FIG. 12 is a diagram illustrating the configuration of an X-RAY photographing part.

An X-RAY photographing part 1200 may include a light emitting part 1210, a control part 1230, a receiving part 1220, and an image processing part 1240.

The light emitting part 1210 may emit X-RAY light in an X-RAY wavelength band based on a desired direction, a desired radiation angle, and a required power.

The receiving part 1220 may receive an X-RAY transmitted through a mobile electronic device and convert the received X-RAY into an electrical signal.

The control part 1230 may control the receiving part 1220 and the light emitting part 1210 to emit an X-RAY according to desired radiation direction, radiation angle, radiation power, and radiation time.

The image processing part 1240 may convert the signal generated by the receiving part 1220 receiving the X-RAY into various types of graphic images.

Additionally, a filter may be added to the X-RAY photographing part 1200 to obtain a desired image, and the filter may be controlled by the control part 1230.

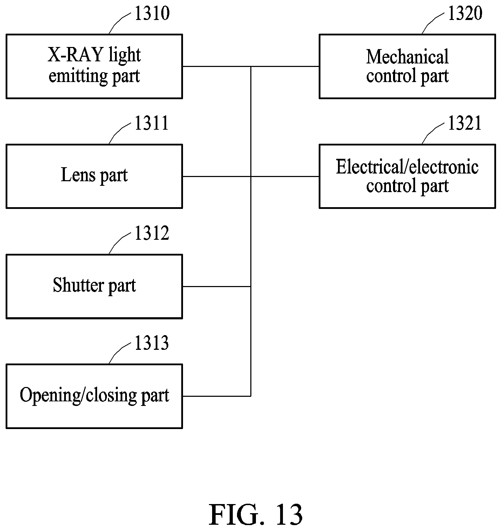

FIG. 13 illustrates a detailed configuration of a light emitting part and a control part of an X-RAY photographing part.

The light emitting part 1210 of the X-RAY photographing part may include an X-RAY light emitting part 1310, a lens part 1311, a shutter part 1312, and an opening/closing part 1313.

The X-RAY light emitting part 1310 may generate an X-RAY.

The lens part 1311 may condense the generated X-RAY in a predetermined shape.

The shutter portion 1312 may adjust the radiation time.

The opening/closing part 1313 may adjust a radiation area and a radiation light quantity.

A mechanical control part 1320 may mechanically adjust the height or position of each element of the light emitting part 1210.

An electrical/electronic control part 1321 may electrically control the height or position of each element of the light emitting part 1210. The electrical/electronic control part 1321 may perform a function of receiving a control signal from the control part 1230 and applying the control signal to the light emitting part 1210 and a function of transmitting alarm information to the light emitting part 1210.

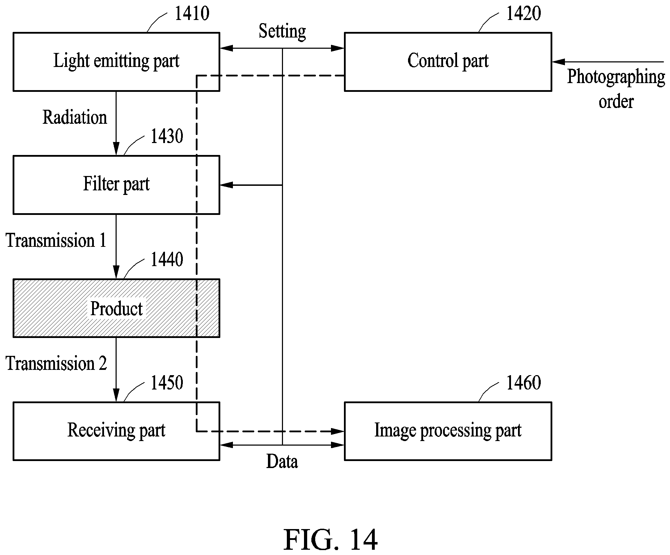

FIG. 14 is a diagram illustrating an example of photographing an X-RAY image of a mobile electronic device through an X-RAY photographing part.

A control part 1420 may receive a photographing order and perform illumination setting in a light emitting part 1410. Light emitted from the light emitting part 1410 may reach a receiving part 1450 after transmission 1 through a filter part 1430 and transmission 2 through a product 1440, which is a mobile electronic device. Thereafter, an image processing part 1450 may receive data generated by the receiving part 1450 and perform image processing thereon.

As shown in FIG. 14, an X-RAY photographing part may photograph an X-RAY image of the mobile electronic device. FIG. 14 shows an example in which a filter part and a mobile electronic device as a product are included.

The control part 1420 may control the light emitting part 1410 and the filter part 1430 to obtain a desired X-RAY image. At this time, functions related to whether to use a filter and selection of a filter medium type in consideration of the X-RAY radiation power, radiation time (exposure time), the mobile electronic device, and the X-RAY transmittance may be controlled.

To determine the internal state of the mobile electronic device through X-RAY, an X-RAY photographing part may change X-RAY radiation conditions according to the positions and materials of the components configured for each type of mobile electronic device.

For example, in the case of a printed circuit board assembly (PCBA) of the mobile electronic device, the PCBA is usually double-sided, and results of photographing respective components on both sides may be totally different in X-RAY images obtained by photographing the components positioned on the top of the PCBA and the components positioned on the bottom of the PCBA by radiating the same X-RAY thereto.

In order to obtain a desired image, the X-RAY photographing part may apply radiation conditions suitable for the desired data by securing basic data for each mobile electronic device model.

If it is not solved by simple control of the X-RAY radiation conditions of the light emitting part, for example, if the power of the radiation conditions exceeds the condition for photographing a component when the basic radiation condition of the X-RAY light emitting part is to verify a component at a desired position in the mobile electronic device, the X-RAY photographing part may meet the radiation conditions using a filter of a predetermined medium that weakens the X-RAY radiation conditions.

The filter may be implemented using an aluminum plate with a predetermined thickness and using several metal plates of a predetermined medium affecting the X-RAY transmittance.

The condition control and filter control of the light emitting part may be performed using the transmission function of X-RAY and a technique for adjusting the degree of transmission.

The transmittance of X-RAY is affected by the degree and material of a transmissive component, but may be high in a long radiation time.

When the X-RAY light emitting part may apply a fixed output scheme and a variable output scheme according to the maximum output power when physically configured, and adjust the exposure time through a shutter.

The shutter may operate in the same manner as the operation principle of a general film camera. That is, the shutter may output a resulting image in white if the light exposure is high and output a resulting image in black if the light exposure is low.

The X-RAY photographing part may obtain an image that cannot be photographed under basic conditions, by adjusting the radiation angle in addition to the conditions for the light emitting part and the filter.

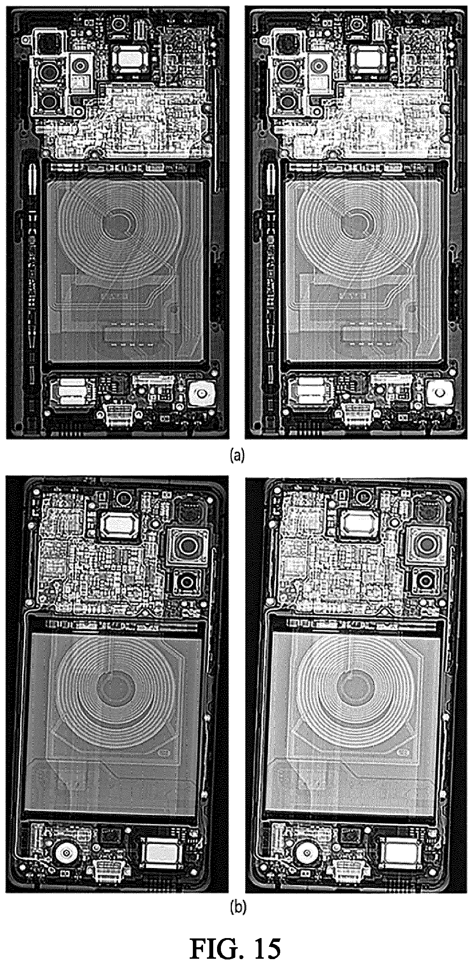

FIG. 15 illustrates the comparison of X-RAY images of the front and rear surfaces of a mobile electronic device according to radiation time.
(a) of FIG. 15 shows X-RAY photographing results of photographing a front surface of a mobile electronic device for each X-RAY radiation time (short/long).
(b) of FIG. 15 shows X-RAY photographing results of photographing a rear surface of the mobile electronic device for each X-RAY radiation time (short/long).

FIG. 15 shows examples of images obtained by photographing the front surface and the rear surface of the mobile electronic device with different X-RAY radiation times.

Referring to FIG. 15, the images photographed with a short radiation time may show the components clearly and distinctly compared to those photographed with a long radiation time.

The mobile electronic device test system 100 may perform photographing for radiographs by varying radiation conditions in consideration of the positions of a mobile electronic device and components to be photographed. In addition, the mobile electronic device test system 100 may obtain desired data by photographing the mobile electronic device according to the photographing conditions of base data under general conditions, rather than special conditions.

The mobile electronic device test system 100 may store the photographing conditions according to a mobile electronic device as data in advance according to a model.

The mobile electronic device test system 100 may recognize the model of the mobile electronic device and verify whether there are components of the mobile electronic device, whether the mobile electronic device is replaced (repaired), whether the mobile electronic device is damaged, whether the outer instrument (including LCD) is damaged, and the like, by means of the X-RAY photographing part according to X-RAY photographing conditions.

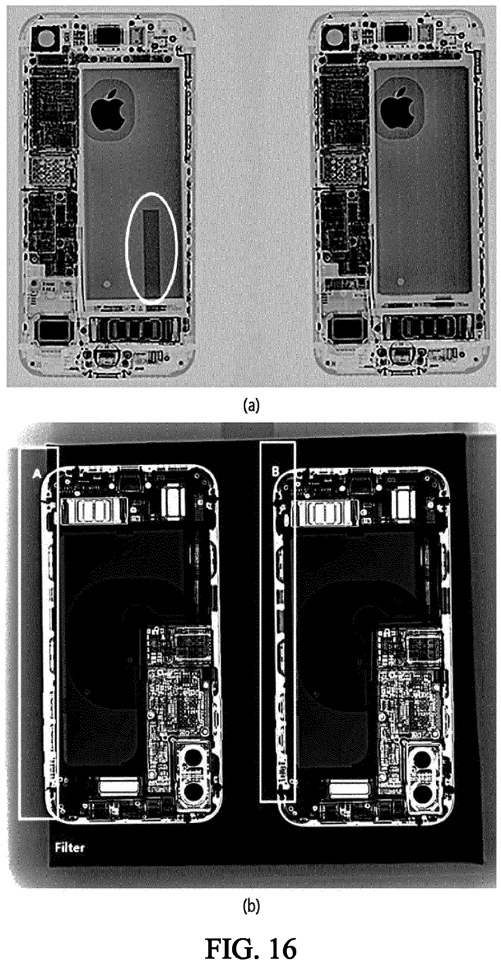

FIG. 16 illustrates examples of radiographs of a mobile electronic device.
(a) of FIG. 16 shows images obtained by photographing mobile electronic devices, wherein a battery of one of OO phones of the same model is replaced.
(b) of FIG. 16 shows the comparison of transmission states according to whether a filter is applied.

In (b) of FIG. 16, the sharpness and transmission states according to whether a filter is present are compared.

The left image in (b) of FIG. 16 is an image obtained when a rectangular filter is applied, the right image is an image photographed without a filter.

In (b) of FIG. 16, the state photographed by X-RAY transmitted through the filter and the state photographed without transmission may be compared with respect to the left side button portion of the mobile electronic device photographed.

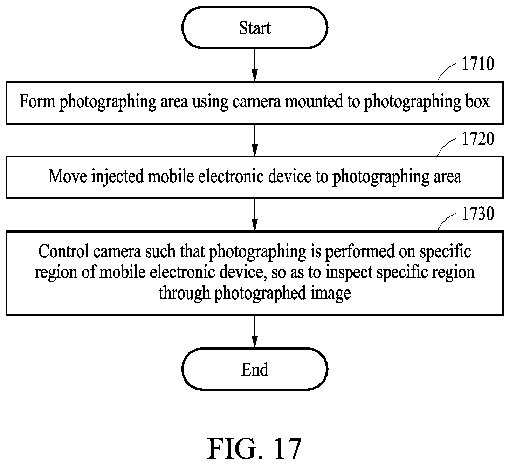

Hereinafter, a workflow of the mobile electronic device test system 100 according to embodiments of the present disclosure will be described in detail with reference to FIG. 17.

FIG. 17 is a flowchart illustrating a method of testing a mobile electronic device in an automated device according to an embodiment of the present disclosure.

The method of testing a mobile electronic device in an automated device according to the present embodiment may be performed by the mobile electronic device test system 100.

First, a camera part of the mobile electronic device test system 100 forms a photographing area using a camera mounted to a photographing box (in operation 1710). Operation 1710 may be a process of forming the photographing area with the camera focusing on a predicted site on which a mobile electronic device inserted into an automated device is to be seated in the future.

The photographing box may be a predetermined space in which one or more cameras are mounted and accommodated, depending on the implementation environment, and may be implemented in an automated device into which a mobile electronic device is inserted for secondhand purchase in the present disclosure.

The photographing area may be formed by causing the camera to focus on a desired point of the mobile electronic device, such as one surface, side surface, or corner surface of the mobile electronic device to be seated in the future. In addition, the photographing area may be formed in length and width that change flexibly according to the type (folder type, flip type, or slide type) of the mobile electronic device to be seated in the future.

Further, a position alignment part of the mobile electronic device test system 100 moves the mobile electronic device inserted through an inlet of the automated device to the photographing area (in operation 1720). Operation 1720 may be a process of moving and seating the mobile electronic device, inserted by the user into the automated device for secondhand purchase, to the formed photographing area.

In moving to the photographing area, the position alignment part may move the mobile electronic device while correcting the pose, direction, balance, and the like of the mobile electronic device, so that the camera may focus on a desired, arbitrary point of the mobile electronic device.

The position alignment part may move the mobile electronic device from the location at which the mobile electronic device is inserted into the automated device to the photographing area using, for example, mechanical power or electromagnetic power.

In addition, when the mobile electronic device is inserted into the automated device in a closed state, the position alignment part may open the mobile electronic device according to the type (flip type or slide type) using mechanical power or electromagnetic power and move the opened mobile electronic device to the photographing area.

That is, the position alignment part may include a repositioning part, a device manipulation part, and a device control part, and may move the mobile electronic device to be in a prescribed pose, then mechanically or electrically open the mobile electronic device with mechanical power or electromagnetic power, and move the open mobile electronic device to the photographing area. Also, the position alignment part may close an open mobile electronic device and then move the mobile electronic device to the photographing area, as necessary.

The repositioning part may perform a function to move the mobile electronic device to a position and direction to be in the prescribed pose, such that the mobile electronic device may be mechanically or electrically open and closed.

The device manipulation part may perform an opening/closing function to fold or unfold a folder/flip-type mobile electronic device, and perform a function to push or pull to open and close a slide-type mobile electronic device.

The device control part may control the repositioning part and the device manipulation part so that the function of repositioning the mobile electronic device and folding and unfolding the mobile electronic device may be smoothly performed.

Preferably, if the camera part is capable of forming a photographing area centered on an expected position in the automated device into which a mobile electronic device is inserted, the position alignment part may implement the invention while minimizing the movement of the mobile electronic device.

Subsequently, as the mobile electronic device is moved to the photographing area, a control part of the mobile electronic device test system 100 controls the camera such that photographing is performed on a specific region of the mobile electronic device, so as to examine the specific region through a photographed image (in operation 1730). Operation 1730 may be a process of performing a test on the mobile electronic device by controlling the photographing of a specific region of the mobile electronic device, which is typically easy to damage.

The specific region of the mobile electronic device, which is typically easy damage, may be, for example, corner surfaces of the mobile electronic device that hit the ground in case of fall, a display surface that is scratched, or the like.

In the photographing control, the control part may designate and control a camera to perform the photographing or reposition and control the camera based on the width or length of the mobile electronic device moved to the photographing area. That is, the control part may specifically designate a camera used for photographing or change the position of a camera, considering that the length and width of a new type of mobile electronic device change noticeably when the mobile electronic device is open, different from a general type of device.

In some embodiments, the mobile electronic device test system 100 may provide illumination incident to the photographing area.

To this end, an illumination part of the mobile electronic device test system 100 may generate illumination toward the photographing area.

The illumination part may generate direct illumination according to the focus of the camera within the photographing area or generate indirect illumination incident to the photographing area as reflected from a side wall of the photographing box.

When the camera focuses on a desired region of the mobile electronic device, the illumination part may employ a direct illumination scheme of generating illumination on a side surface of the photographing box directly without reflection.

On the other hand, when the camera does not focus on a desired region and thus, reflection on a side surface of the photographing box is needed, the illumination part may employ an indirect illumination scheme of causing illumination to be also reflected.

In particular, the illumination part may determine an angle of emission of the direct illumination or an angle of reflection of the indirect illumination from the side wall in consideration of the width or length of the mobile electronic device moved to the photographing area.

That is, the illumination part may illuminate the whole of a new type of mobile electronic device having a new width or length as it is open, for example, by increasing the angle of emission of the direct illumination or increasing the angle of reflection of the indirect illumination based on the increasing width or length, different from a general type of mobile electronic device.

In some embodiments, the mobile electronic device test system 100 may provide illumination for a wider area by generating illumination in a direction of a top end of the photographing box.

To this end, the top end of the photographing box may be implemented with one or more surfaces having respective angles.

Under such circumstances, the illumination part may generate the indirect illumination toward a surface having an angle that reflects the indirect illumination to the specific region of the mobile electronic device, among the one or more surfaces.

Through this, the illumination part may generate indirect illumination for the entire photographing box by reflection on the surfaces having various angles, so that the photographing using the camera may be smoothly performed.

In some embodiments, the mobile electronic device test system 100 may provide a radiograph by X-RAY.

To this end, an X-RAY photographing part of the mobile electronic device test system 100 may generate a radiograph by radiating an X-ray toward the mobile electronic device moved to the photographing area according to a predetermined radiation condition.

Here, the radiation condition is about a radiation power and a radiation time of the X-RAY according to the positions of the mobile electronic device and a component in the mobile electronic device.

The X-RAY photographing part may appropriately determine the X-RAY radiation condition depending on a mobile electronic device, thereby generating a radiograph through which the states of components in the mobile electronic device may be examined accurately.

In some embodiments, a filter part of the mobile electronic device test system may be selectively used based on the transmittance of the X-RAY in the mobile electronic device. That is, the filter part may be a means that is optionally employed according to the transmission degree of the mobile electronic device by the X-RAY radiated by the X-RAY photographing part 150.

For example, when the X-RAY transmittance is too high and a radiograph is not clear, the filter part may have a filter medium type or installation slope for use selected according to the transmittance, if used.

The medium type may include, for example, air (an air layer), a metal plate, or the like according to the refraction and diffraction characteristics of the medium.

The installation slope of the medium may be designed so as to physically adjust the degree to which the X-RAY is transmitted through the filter.

According to an embodiment of the present disclosure, it is possible to provide a method of testing a mobile electronic device in an automated device and a mobile electronic device test system, that may trade in a mobile electronic device having a new size and operation method and perform an examination on the trade-in mobile electronic device.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A method of testing a mobile electronic device in an automated device, the method comprising:
forming a photographing area using a camera mounted to a photographing box, by a camera part;
moving a mobile electronic device inserted through an inlet of the automated device to the photographing area, by a position alignment part; and
as the mobile electronic device is moved to the photographing area,
controlling the camera such that photographing is performed on a specific region of the mobile electronic device, so as to inspect the specific region through a photographed image, by a control part.

2. The method of claim 1, further comprising:
designating and controlling a camera to perform the photographing or repositioning and controlling the camera based on a width or length of the mobile electronic device moved to the photographing area, by the control part.

3. The method of claim 1, further comprising:
generating direct illumination according to a focus of the camera within the photographing area or generating indirect illumination incident to the photographing area as reflected from a side wall of the photographing box, by an illumination part, as an operation of generating a light toward the photographing area.

4. The method of claim 3, further comprising:
determining an angle of emission of the direct illumination or an angle of reflection of the indirect illumination from the side wall in consideration of a width or length of the mobile electronic device moved to the photographing area, by the illumination part.

5. The method of claim 3, wherein a top end of the photographing box is implemented with one or more surfaces having respective angles,
wherein the method further comprises generating the indirect illumination toward a surface having an angle that reflects the indirect illumination to the specific region of the mobile electronic device, among the one or more surfaces, by the illumination part.

6. The method of claim 1, further comprising:
generating a radiograph by radiating an X-RAY toward the mobile electronic device moved to the photographing area according to a predetermined radiation condition, by an X-RAY photographing part,
wherein the radiation condition is about a radiation power and a radiation time of the X-RAY according to positions of the mobile electronic device and a component in the mobile electronic device.

7. The method of claim 6, wherein the method further comprises determining use based on a transmittance of the X-RAY in the mobile electronic device, by a filter part,
wherein the filter part has a filter medium type or installation slope for use selected according to the transmittance.

8. The method of claim 1, further comprising:
moving the mobile electronic device to the photographing area by opening or closing the mobile electronic device using mechanical power or electromagnetic power according to a type of the mobile electronic device, by the position alignment part.

9. A mobile electronic device test system comprising:
a camera part configured to form a photographing area using a camera mounted to a photographing box;
a position alignment part configured to move a mobile electronic device inserted through an inlet of an automated device to the photographing area; and
a control part configured to control the camera such that photographing is performed on a specific region of the mobile electronic device, so as to inspect the specific region through a photographed image, as the mobile electronic device is moved to the photographing area.

10. The mobile electronic device test system of claim 9, wherein the control part is further configured to designate and control a camera to perform the photographing or reposition and control the camera based on a width or length of the mobile electronic device moved to the photographing area.

11. The mobile electronic device test system of claim 9, further comprising:
an illumination part configured to generate illumination toward the photographing area,
wherein the illumination part is further configured to generate direct illumination according to a focus of the camera within the photographing area or generate indirect illumination incident to the photographing area as reflected from a side wall of the photographing box.

12. The mobile electronic device test system of claim 11, wherein the illumination part is further configured to determine an angle of emission of the direct illumination or an angle of reflection of the indirect illumination from the side wall in consideration of a width or length of the mobile electronic device moved to the photographing area.

13. The mobile electronic device test system of claim 11, wherein a top end of the photographing box is implemented with one or more surfaces having respective angles,
wherein the illumination part is further configured to generate the indirect illumination toward a surface having an angle that reflects the indirect illumination to the specific region of the mobile electronic device, among the one or more surfaces.

14. The mobile electronic device test system of claim 9, further comprising:
an X-RAY photographing part configured to generate a radiograph by radiating an X-RAY toward the mobile electronic device moved to the photographing area according to a predetermined radiation condition,
wherein the radiation condition is about a radiation power and a radiation time of the X-RAY according to positions of the mobile electronic device and a component in the mobile electronic device.

15. The mobile electronic device test system of claim 14, wherein the mobile electronic device test system further comprises a filter part selectively used based on a transmittance of the X-RAY in the mobile electronic device,
wherein the filter part has a filter medium type or installation slope for use selected according to the transmittance.

16. The mobile electronic device test system of claim 9, wherein the position alignment part is further configured to move the mobile electronic device to the photographing area by opening or closing the mobile electronic device using mechanical power or electromagnetic power according to a type of the mobile electronic device.

17. A computer-readable storage medium storing a program for performing the method of claim 1.
